# EUROPÄISCHE PATENTSCHRIFT

(11) **EP 2 212 168 B1**
(45) Veröffentlichungstag und Bekanntmachung des Hinweises auf die Patenterteilung: **14.01.2015**
(21) Anmeldenummer: 08851067.2
(22) Anmeldetag: 20.11.2008
(51) Int. Cl.: B60T 8/44, B60T 13/14

(54) **BREMSSYSTEM FÜR KRAFTFAHRZEUGE**
BRAKE SYSTEM FOR MOTOR VEHICLES
SYSTÈME DE FREINAGE POUR VÉHICULES

(30) Priorität: 21.11.2007 DE 102007055515; 19.11.2008 DE 102008058240
(43) Veröffentlichungstag der Anmeldung: 04.08.2010
(73) Patentinhaber: Continental Teves AG & Co. OHG, 60488 Frankfurt (DE)
(72) Erfinder: DRUMM, Stefan, A., 55291 Saulheim (DE); SCHIEL, Lothar, 65719 Hofheim (DE)
(86) Internationale Anmeldenummer: PCT/EP2008/065889
(87) Internationale Veröffentlichungsnummer: WO 2009/065884

(56) Entgegenhaltungen:
- EP-A- 0 267 018
- WO-A-2007/031398
- DE-A1- 2 725 941
- DE-A1- 4 322 292

## Beschreibung

Die Erfindung betrifft ein Bremssystem für Kraftfahrzeuge mit einem mittels eines Bremspedals betätigbaren Hauptbremszylinder, einem dem Hauptbremszylinder zugeordneten Druckmittelvorratsbehälter, einer dem Hauptbremszylinder wirkungsmäßig vorgeschalteten hydraulischen Verstärkerstufe mit einem Verstärkerkolben, der mit einem von einer Druckquelle bereit gestellten hydraulischen Verstärkungsdruck beaufschlagt wird und der in sämtlichen Betriebsarten einen direkten mechanischen Durchgriff vom Bremspedal auf einen hydraulischen Kolben des Hauptbremszylinders ermöglicht, sowie mit einer elektrisch ansteuerbaren Druckregelventilanordnung zum Dosieren des Verstärkungsdruckes.

Ein derartiges elektrohydraulisches Bremssystem ist aus der deutschen Offenlegungsschrift DE 27 25 941 bekannt. Der hydraulischen Verstärkungsstufe ist bei dem vorbekannten Bremssystem ein pedalbetätigter Bremskraftverstärker vorgeschaltet. Als Druckregelventilanordnung zur Regelung des hydraulischen Verstärkungsdruckes dient ein 3/2-Wegeventil, das elektrisch angesteuert wird. Als weniger vorteilhaft werden bei dem bekannten Bremssystem die Tatsachen empfunden, dass neben der erwähnten Anordnung zum Erzeugen einer elektrisch gesteuerten Bremskraftunterstützung der pneumatische Bremskraftverstärker eingesetzt werden muss um bei fehlender elektrischer Ansteuerung eine Bremskraftverstärkung zu bewirken. Es werden zwei hintereinender geschaltete Bremskraftverstärker verwendet, ein elektrischer und ein pneumatischer.

Aus EP 0 267 018 A ist eine hydraulische Bremsanlage mit einem Hauptbremszylinder mit einem Primär- und einem Sekundärbremskolben bekannt, wobei auf den Primärkolben ein Verstärkungsdruck von einem Druckspeicher oder einem pneumatischen Bremskraftverstärker wirkt, dieser Druck von einem Steuerkolben gesteuert und der Steuerkolben seinerseits von dem Primärkolben hydraulisch betätigt wird.

Aufgrund der erwähnten Verwendung eines pedalbetätigbaren und eines elektrisch betätigbaren Bremskraftverstärkers, stellt sich die Aufgabe, ein derartiges Bremssystem mit lediglich einem Bremskraftverstärker zu realisieren, der sowohl pedalbetätigbar als auch elektrisch betätigbar ist.

Diese Aufgabe wird erfindungsgemäß durch ein Bremssystem mit den Merkmalen nach dem unabhängigen Anspruch 1 gelöst. Unteransprüche zusammen mit Figurenbeschreibungen geben weitere Vorteilhafte Weiterbildungen und Ausführungen an. Durch erfindungsgemäße Merkmalkombination ist die Druckregelventilanordnung zusätzlich hydraulisch ansteuerbar. Der hydraulische Ansteuerdruck entspricht der Pedalkraft, so dass der vorgeschaltete pedalbetätigte Bremskraftverstärker nicht mehr benötigt wird.

Zur Konkretisierung des Erfindungsgedankens ist vorgesehen, dass die hydraulische Ansteuerung der Druckregelventilanordnung mittels des vom Hauptbremszylinder erzeugten Druckes erfolgt.

Dabei ist es besonders vorteilhaft, wenn die Druckregelventilanordnung zweistufig ausgeführt ist.

Eine wesentliche Vereinfachung des Aufbaus der Verstärkungsdruckregelung wird bei einer Weiterbildung der Erfindung dadurch erreicht, dass die Druckregelventilanordnung eine elektrisch ansteuerbare Vorsteuerstufe sowie eine zweifach hydraulisch ansteuerbare Vorsteuerstufe sowie eine zweifach hydraulisch ansteuerbare Ventilhauptstufe aufweist.

Bei einer derartigen Ausführung ist es besonders vorteilhaft, wenn die Vorsteuerstufe durch die Hintereinanderschaltung eines analog regelbaren, stromlos geschlossenen (SG-) 2/2-Wegeventils und eines analog regelbaren, stromlos offenen (SO-) 2/2-Wegeventils gebildet ist, wobei der hydraulische Mittenabgriff zwischen den beiden Ventilen einen der Ansteuerdrücke für die Ventilhauptstufe liefert. Durch die Verwendung vielfach erprobter elektronischer Komponenten wird eine hohe Betriebssicherheit gewährleistet.

Eine erhebliche Erhöhung sowohl der Regelgüte als auch der Dynamik der oben erwähnten Verstärkungsdruckregelung wird bei einer weiteren Ausführung des Erfindungsgegenstandes dadurch erreicht, dass die Ventilhauptstufe aus einem 3/3-Wegeventil mit einer Ventilhülse, einem in der Ventilhülse axial verschiebbaren Ventilkörper, einem ersten und einem zweiten Ansteuerkolben besteht, wobei der erste Ansteuerkolben eine erste hydraulische Ansteuerkammer, der erste und der zweite Ansteuerkolben eine zweite hydraulische Ansteuerkammer, der zweite Ansteuerkolben und der Ventilkörper eine hydraulische Behälteranschlusskammer sowie der Ventilkörper und die Ventilhülse eine Hochdruckanschlusskammer und eine Arbeitdruckanschlusskammer begrenzen.

Eine besonders kompakt bauende Ausführung des Erfindungsgegenstandes zeichnet sich dadurch aus, dass der Ventilkörper und der zweite Ansteuerkolben einstückig ausgebildet sind.

Bei einer anderen vorteilhaften Weiterbildung der Erfindung ragt der Ventilkörper auf seiner dem zweiten Ansteuerkolben abgewandten Stirnseite in die Arbeitdruckanschlusskammer hinein und wird mit dem Druck der Hochdruckanschlusskammer beaufschlagt.

Eine einwandfreie hydraulische Ansteuerung der vorhin erwähnten Ventilhauptstufe wird bei einer weiteren Ausführung des Erfindungsgegenstandes dadurch erreicht, dass die zweite Ansteuerkammer hydraulisch mit einem Mittenabgriff der Vorsteuerstufe verbunden ist.

Eine weitere Möglichkeit der hydraulischen Ansteuerung des Druckregelventils besteht darin, dass die erste Ansteuerkammer hydraulisch mit einem Druckkreis des Hauptbremszylinders verbunden ist.

Eine besonders zuverlässig funktionierende Ausführungsvariante des Erfindungsgegenstandes sieht vor, dass der Ventilkörper im Zusammenwirken mit der Ventilhülse in einer Ruhestellung eine hydraulische Verbindung zwischen der Arbeitsdruckanschlusskammer und einer Behälteranschlusskammer herstellt, deren hydraulischer Durchtrittsquerschnitt sich beim Aufbringen eines Verfahrwegs des Ventilkörpers in der Ventilhülse kontinuierlich verkleinert und der Ventilkörper (14) beim weiteren Verschieben um einen geringen "Überdeckungsweg" die drei Anschlusskammern voneinander trennt, um bei einem noch weiteren Verschieben eine hydraulische Verbindung zwischen der Hochdruckanschlusskammer und der Arbeitsdruckanschlusskammer kontinuierlich zu öffnen.

Bei einer weiteren Ausgestaltung des Erfindungsgegenstandes ist der erste Ansteuerkolben als ein Stufenkolben ausgebildet.

Für eine einwandfreie Funktion des Druckregelventils ist besonders sinnvoll, wenn eine hydraulische Ringkammer zwischen den beiden Dichtquerschnitten des Stufenkolbens hydraulisch mit der Behälteranschlusskammer verbunden ist.

Ein weiterer Vorteil der Erfindung ist, dass die pedalgesteuerte Komponente der Bremskraftverstärkung deaktiviert werden kann, indem die hydraulische Verbindung zwischen dem Hauptbremszylinder und dem Druckregelventil getrennt wird. Eine solche Trennung zwischen dem Hauptbremszylinder und dem Druckregelventil wird bei einer anderen Ausführungsvariante dadurch gewährleistet, dass die Verbindung zwischen dem Hauptbremszylinder und der ersten Ansteuerkammer mittels eines elektromagnetisch betätigbaren, stromlos offenen (SO-) 2/2-Wegeventils absperrbar ist, wobei ein wirkungsmäßig zu diesem Ventil parallel geschaltetes Rückschlagventil vorgesehen ist, das unabhängig von der Schaltstellung des stromlos offenen (SO-) 2/2-Wegeventils einen die erste Ansteuerkammer verlassenden Druckmittelvolumenstrom zulässt.

Für die vorhin erwähnte hydraulische Ansteuerung des Druckregelventils durch den im Hauptbremszylinder eingesteuerten Druck ist es besonders vorteilhaft, wenn die der Arbeitsdruckanschlusskammer zugewandte Stirnfläche des Ventilkörpers größer als die die erste Ansteuerkammer begrenzende Fläche des Stufenkolbens ist.

In einer anderen bevorzugten Ausführungsform der Erfindung ist zwischen der Arbeitsdruckanschlusskammer und dem Druckmittelvorratsbehälter eine hydraulische Verbindung vorgesehen, in der ein zum Druckmittelvorratsbehälter schließendes Rückschlagventil eingefügt ist.

Eine zuverlässig arbeitende Erfassung des Fahrerverzögerungswunsches wird schließlich dadurch erreicht, dass ein Drucksensor zum Erfassen des im Hauptbremszylinder eingesteuerten Druckes vorgesehen ist.

Eine redundante Erfassung des Fahrerverzögerungswunsches wird dadurch gewährleistet, dass ein Wegsensor zum Erfassen des Weges des Verstärkerkolbens vorgesehen ist.

Die vorliegende Erfindung wird nachfolgend an einem Ausführungsbeispiel unter Bezugnahme auf die beiliegende schematische Zeichnung näher erläutert, wobei die gleichen Komponenten mit den gleichen Bezugszeichen versehen sind. In der Zeichnung zeigen:
Fig. 1 den Aufbau einer Ausführung des erfindungsgemäßen Bremssystems, und
Fig. 2 den Aufbau eines bei der Ausführung nach Fig. 1 einsetzbaren Druckregelventils in größerem Maßstab.

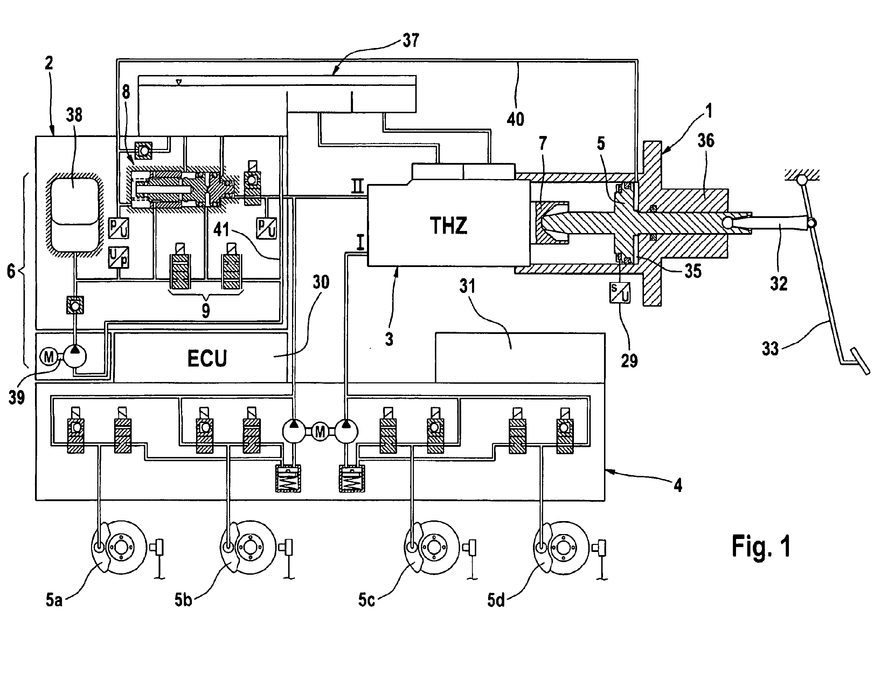

Das in Fig. 1 dargestellte erfindungsgemäße Bremssystem besteht im Wesentlichen aus einer Betätigungseinrichtung 1, einer hydraulischen Steuereinheit 2, wobei die Betätigungseinheit 1 und die Steuereinheit 2 einen Bremskraftverstärker bilden, sowie einem dem Bremskraftverstärker wirkungsmäßig nachgeschalteten Hauptbremszylinder bzw. Tandemhauptzylinder 3, an dessen nicht dargestellte Druckräume Radbremskreise I, II angeschlossen sind, die unter Zwischenschaltung eines bekannten ABS/ESP-Hydroaggregats bzw. eines steuerbaren Radbremsdruckmodulationsmoduls 4 Radbremsen 5a - d eines Kraftfahrzeuges mit hydraulischem Druckmittel versorgen. Der hydraulischen Steuereinheit 2 ist eine elektronische Bremssystemsteuereinheit 30 zugeordnet, während dem Radbremsdruckmodulationsmodul 4 eine elektronische Steuer- und Regeleinheit 31 zugeordnet ist. Zur Ansteuerung der Bremsbetätigungseinheit 1 ist ein Bremspedal 33 vorgesehen, mit dem eine Kolbenstange 32 gekoppelt ist, die unter Zwischenschaltung eines Verstärkerkolbens 5 in kraftübertragender Verbindung mit einem ersten Kolben bzw. Primärkolben 7 des Hauptbremszylinders 1 steht. Der Verstärkerkolben 5 ist in einem Verstärkergehäuse 36 axial verschiebbar geführt und begrenzt dort einen hydraulischen Verstärkerraum, der mit dem Bezugszeichen 35 versehen ist.

Die vorhin erwähnte hydraulische Steuereinheit 2 besteht im Wesentlichen aus einer Druckbereitstellungseinrichtung 6 sowie einer Druckregelventilanordnung 8. Die Druckbereitstellungseinrichtung 6 wird durch einen hydraulischen Hochdruckspeicher 38 sowie ein Motor-PumpenAggregat 39 zum Aufladen des Hochdruckspeichers 38 gebildet, während der Ausgang der Druckregelventilanordnung 8 einerseits mittels einer hydraulischen Verbindung 25 mit dem vorhin erwähnten Druckmittelvorratsbehälter 37 und andererseits über eine an die hydraulische Verbindung 25 anschließende Leitung 40 mit dem Verstärkerraum 35 verbunden. Außerdem weist die hydraulische Steuereinheit 2 eine der Druckregelventilanordnung 8 zugeordnete Vorsteuerstufe 9 auf, deren Aufgabe im nachfolgenden Text erläutert wird. Eine weitere Leitung 41 verbindet die Saugseite des Motor-Pumpen-Aggregats 39 mit dem vorhin genannten Druckmittelvorratsbehälter 37. Das Motor-PumpenAggregat 39 ist vorzugsweise als eine von den anderen Komponenten der hydraulischen Steuereinheit 2 abgesetzte Baueinheit ausgebildet und mit körperschallisolierenden Befestigungen und Hydraulikverbindungen ausgestattet. Der im Hochdruckspeicher 38 bereit gehaltene hydraulische Druck wird von einem Drucksensor erfasst, der mit dem Bezugszeichen 45 versehen ist.

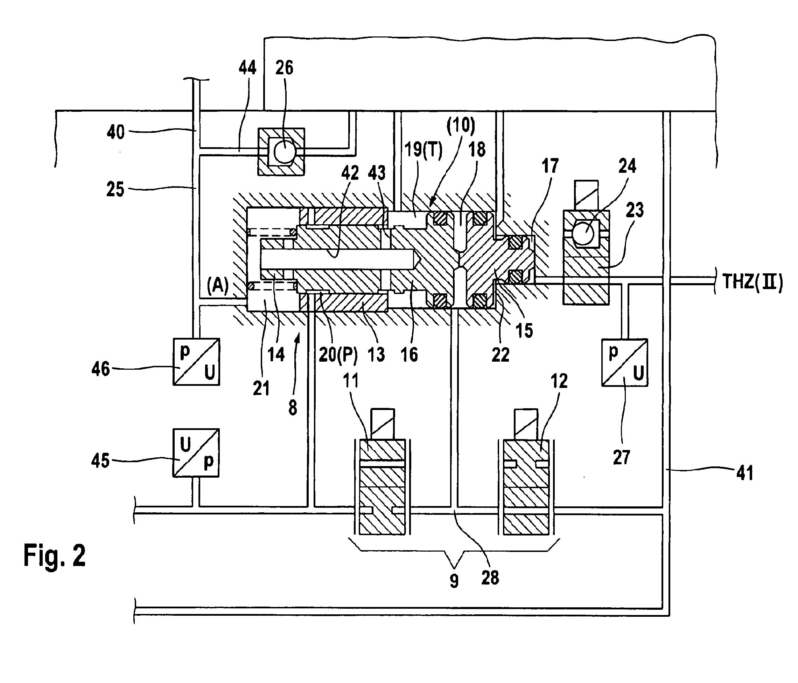

Wie insbesondere Fig. 2 zu entnehmen ist, ist die Druckregelventilanordnung 8 zweistufig ausgeführt und weist vorzugsweise außer der genannten elektrisch ansteuerbaren Vorsteuerstufe 9 eine zweifach hydraulisch ansteuerbare Ventilhauptstufe auf, die mit dem Bezugszeichen 10 versehen ist, sowie eine hydraulische Ansteuerstufe, deren Aufbau in der nachfolgenden Beschreibung erläutert wird.

Die Vorsteuerstufe 9 besteht aus einer Hintereinanderschaltung eines analog regelbaren, stromlos geschlossenen (SG-) 2/2-Wegeventils 11 sowie eines analog regelbaren, stromlos offenen (SO-) 2/2-Wegeventils 12, wobei der hydraulische Mittenabgriff 28 zwischen den beiden Ventilen 11, 12 einen der Ansteuerdrücke für die Ventilhauptstufe 10 liefert. Die hydraulische Ansteuerstufe wird durch eine erste Ansteuerkammer 17, einen ersten Ansteuerkolben bzw. Stufenkolben 15, einen mit dem Druckmittelvorratsbehälter 37 verbundenen Ringraum 22 sowie eine vom Stufenkolben 15 begrenzte zweite Ansteuerkammer 18 gebildet, die u. a. mit dem o. g. Mittenabgriff 28 der Vorsteuerstufe 9 verbunden ist. Die zweite Ansteuerkammer 18 wird andererseits von einem zweiten Ansteuerkolben 16 begrenzt, der zusammen mit einer Ventilhülse 13 eine Behälteranschlusskammer 19 begrenzt und der bei der gezeigten Ausführung einteilig mit einem Ventilkörper 14 ausgebildet ist. Die Ventilhülse 13 bildet zusammen mit dem Ventilkörper 14 die vorhin erwähnte Hauptstufe 10 der Druckregelventilanordnung 8.

Fig. 2 ist weiterhin zu entnehmen, dass die erste Ansteuerkammer 17 unter Zwischenschaltung eines elektromagnetisch betätigbaren, stromlos offenen (SO-) 2/2-Wegeventils 23 an den zweiten Bremskreis II angeschlossen ist. Der im zweiten Bremskreis eingesteuerte Druck wird durch einen Drucksensor 27 erfasst, wobei das 2/2-Wegeventil 23 in seiner bestromten Schaltstellung die Funktion eines zur Ansteuerstufe schließenden Rückschlagventils erfüllt, was durch das entsprechende, mit dem Bezugszeichen 24 versehene Hydrauliksymbol in Fig. 2 angedeutet ist.

Währenddessen bildet der Ventilkörper 13 zusammen mit der Ventilhülse 13 eine Hochdruckanschlusskammer 20, die mit dem Ausgang der Druckbereitstellungseinrichtung 6 bzw. 38 verbunden ist. Die Hochdruckanschlusskammer 20 ist durch ein Verschieben des Ventilkörpers 14 mit einer Arbeitsdruckkammer 21 verbindbar, die in der dargestellten Ausgangsposition oder Ruhestellung des Ventilkörpers mittels im Ventilkörper 14 ausgebildeter Druckmittelkanäle 42, 43 mit der Behälteranschlusskammer 19 verbunden ist. Der in der Arbeitsdruckkammer 21 eingesteuerte Verstärkungsdruck wird durch einen dritten Drucksensor 46 erfasst. Dabei ist es vorteilhaft, wenn der Durchmesser des in der Ventilhülse 13 geführten Ventilkörpers 14 größer als der Durchmesser der kleineren Stufe des Stufenkolbens 15 ist. Außerdem ist Fig. 2 zu entnehmen, dass an die Arbeitsdruckkammer 21 (über die vorhin genannte Verbindungsleitung 25) die zur Verstärkerkammer 35 führende Leitung 40 sowie an diese angeschlossene, zum Druckmittelvorratsbehälter 37 führende weitere Leitung 44 angeschlossen sind. In der letztgenannten Leitung 44 ist dabei ein zum Druckmittelvorratsbehälter 37 schließendes Rückschlagventil 26 eingefügt.

Im nachfolgenden Text wird die Funktionsweise des erfindungsgemäßen Bremssystems im Zusammenhang mit der Zeichnung näher erläutert.

Der erste Betriebsmodus entspricht einer rein elektrischen, der sog. "Brake-by-wire"-Betriebsart, bei der sämtliche Komponenten des Bremssystems intakt sind und einwandfrei arbeiten. Dies entspricht der Nominalfunktion des erfindungsgemäßen Bremssystems. In diesem Modus wird das Ventil 23 geschlossen und zum Einregeln des für die momentane Bremsung benötigten hydraulischen Druckes im Verstärkerraum 35 wird die Druckregelventilanordung 8 derart angesteuert, dass zur Druckerhöhung Ventil 12 geschlossen, Ventil 11 geöffnet wird, wodurch Druckmittel in die Kammer 18 einströmt, wodurch der Ventilkörper 16 bewegt wird, wodurch die Druckabbausteuerkante d.h. die Verbindung vom Arbeitsdruckraum 21 zum Behälteranschlusskammer 19 geschlossen wird und bei weiterem Einströmen die Verbindung zwischen der Hochdruckanschlusskammer 20 und der Arbeitsdruckanschlusskammer 21 geöffnet wird. Zum Druck Halten wird durch dosiertes Öffnen des Ventils 12 ein teilweises Abströmen von Druckmittel aus der Kammer 18 ermöglicht, wodurch sich der Ventilkörper 16 nach rechts verschiebt und so die Druckaufbausteuerkante d.h. die Verbindung von der Hochdruckanschlusskammer 20 zur Arbeitsdruckanschlusskammer 21 absperrt. während zum Druckabbau durch ein weiteres Abströmen von Druckmittel aus der Kammer 18 ein weiteres Verschieben des Ventilkörpers 16 nach rechts erfolgt wodurch die Druckabbausteuerkante, d.h. die die Verbindung zwischen der Arbeitsdruckanschlusskammer 21 und der Behälteranschlusskammer 19 geöffnet wird.

Der Vorgang der Ansteuerung der analog regelbaren 2/2-Wegeventile 11, 12 werden von der elektronischen Steuereinheit 30 derart koordiniert, dass der Druck in der Arbeitsdruckanschlusskammer 21 einem Solldruckwert angenähert wird. Dieser Solldruckwert ergibt sich einerseits aus einer erfassten Betätigungskomponente des Bremspedals 33 und andererseits aus einer Fremdbetätigungskomponente. Die Betätigungskomponente des Bremspedals 33 wird aus dem Betätigungsweg des Bremspedals 33 bzw. des Verstärkerkolbens 5 ermittelt, der mittels des Wegsensors 29 erfasst wird und der sich entsprechend einer vorzugsweise progressiven Kennlinie in Folge einer auf das Bremspedal 33 ausgeübten Betätigungskraft in einer aufgrund der Progression nicht proportionalen Relation einstellt.

In einem zweiten Betriebsmodus, der durch einen Spannungseinbruch im Fahrzeugbordnetz charakterisiert ist und einer ersten Rückfallebene entspricht, ist ein elektronisch gesteuerter Druckaufbau in der Arbeitsdruckanschlusskammer 21 nicht möglich. Zu diesem Zweck wird die Druckregelventilanordnung 8 mit Hilfe des im Hauptbremszylinder 3 durch die Betätigung des Bremspedals 33 eingesteuerten Druckes 35 hydraulisch angesteuert, wobei die Ansteuerung auf hydraulischem Wege über das offene Elektromagnetventil 23 und die Druckkammer 17 erfolgt und als Energiequelle das im Hochdruckspeicher 38 unter Druck bevorratete Druckmittel verwendet wird. Ansonsten erfolgt der Druckaufbau in der Arbeitsdruckanschlusskammer 21 wie im ersten Betriebsmodus.

In einem dritten Betriebsmodus, der durch das Fehlen eines von der hydraulischen Druckbereitstellungseinrichtung 6 bzw. 38 erzeugten Druckes charakterisiert ist, kann das Bremssystem rein mechanisch betätigt werden. Der Verstärkerkolben 5 bewegt sich unter dem Einfluss einer Bremspedalbetätigung von seinem Anschlag nach links und verschiebt den Hauptbremszylinderkolben 7 durch mechanischen Kontakt. Dabei ermöglicht das Rückschlagventil 26 das Nachströmen von Druckmittel aus dem Behälter 37 in den Verstärkerraum 35. Die Betätigung des Hauptbremszylinders 3 erfolgt ausschließlich mit Muskelkraft des Fahrzeugführers.

Durch die vorliegende Erfindung wird eine einfach aufgebaute Bremsanlage ermöglicht, bei der eine elektronische Stabilitätsregelfunktion (ESP) einfacher realisiert werden kann, als in herkömmlichen Bremsanlagen, weil eine spezielle ESP-Hydraulik nicht benötigt wird. Bei Fahrzeugen mit der erfindungsgemäßen Bremsanlage ist eine spezielle ESP-Hydraulik überflüssig - die erfindungsgemäße Fremdbremshydraulik in Verbindung mit einem herkömmlichen ABS-System erbringt eine weit bessere Funktion. Es werden weniger elektromagnetisch betätigbare Ventile benötigt als für eine herkömmliche ESP-Hydraulik. Außerdem weist die erfindungsgemäße Bremsanlage eine bessere Energiebilanz und eine geringere Geräuschentwicklung auf, als eine herkömmliche ESP-Hydraulik, weil das dort im ESP-Betrieb erforderliche Umpumpen von Bremsflüssigkeit zum Erzeugen von Staudruck an einem Druckbegrenzungsventil entfällt.

## Patentansprüche

1. Bremssystem für Kraftfahrzeuge mit einem mittels eines Bremspedals (33) betätigbaren Hauptbremszylinder (3), einem dem Hauptbremszylinder (3) zugeordneten Druckmittelvorratsbehälter (37), einer dem Hauptbremszylinder (3) wirkungsmäßig vorgeschalteten hydraulischen Verstärkerstufe (5, 35, 40) mit einem Verstärkerkolben (5), der mit einem von einer Druckquelle (6) bereit gestellten hydraulischen Verstärkungsdruck beaufschlagt wird und der in sämtlichen Betriebsarten einen direkten mechanischen Durchgriff vom Bremspedal (33) auf einen hydraulischen Kolben (7) des Hauptbremszylinders (3) ermöglicht, sowie mit einer elektrisch ansteuerbaren Druckregelventilanordnung (8) zum Dosieren des Verstärkungsdruckes, **dadurch gekennzeichnet, dass** die Druckregelventilanordnung (8) eine zweifach hydraulisch ansteuerbare Ventilhauptstufe (10) aufweist, die in einer ersten Betriebsart durch elektrisch ansteuerbaren Ventile (11, 12) einer Vorsteuerstufe (9) angesteuert ist und in einer anderen Betriebsart mittels eines vom Hauptbremszylinder (3) erzeugten Druckes angesteuert ist.

2. Bremssystem nach Anspruch 1 **dadurch gekennzeichnet, dass** die Vorsteuerstufe (9 bzw. 11, 12) durch die Hintereinanderschaltung eines analog regelbaren, stromlos geschlossenen (SG-) 2/2-Wegeventils (11) und eines analog regelbaren, stromlos offenen (SO-) 2/2-Wegeventils (12) gebildet ist, wobei ein hydraulischer Mittenabgriff (28) zwischen den beiden Ventilen (11, 12) einen der Ansteuerdrücke für die Ventilhauptstufe (10) liefert.

3. Bremssystem nach Anspruch 1 oder 2 **dadurch gekennzeichnet, dass** die Druckregelventilanordnung (8) aus einem 3/3-Wegeventil mit einer Ventilhauptstufe (10) sowie einer hydraulischen Ansteuerstufe (15, 16, 17, 22, 18) besteht, wobei die Ventilhauptstufe (10) eine Ventilhülse (13) sowie einen in der Ventilhülse .(13) axial verschiebbaren Ventilkörper (14) aufweist, während die hydraulische Ansteuerstufe (15, 16, 17, 22, 18) aus einem ersten (15) und einem zweiten Ansteuerkolben (16) besteht, wobei der erste Ansteuerkolben (15) eine erste hydraulische Ansteuerkammer (17), der erste (15) und der zweite Ansteuerkolben (16) eine zweite hydraulische Ansteuerkammer (18), der zweite Ansteuerkolben (16) und der Ventilkörper (14) eine hydraulische Behälteranschlusskammer (19) sowie der Ventilkörper (14) und die Ventilhülse (13) eine Hochdruckanschlusskammer (20) und eine Arbeitdruckanschlusskammer (21) begrenzen.

4. Bremssystem nach Anspruch 3 **dadurch gekennzeichnet, dass** der Ventilkörper (14) und der zweite Ansteuerkolben (16) einstückig ausgebildet sind.

5. Bremssystem nach einem der Ansprüche 3 oder 4 **dadurch gekennzeichnet, dass** der Ventilkörper (14) auf seiner dem zweiten Ansteuerkolben (16) abgewandten Stirnseite in die Arbeitdruckanschlusskammer (21) hineinragt und mit dem Druck der Hochdruckanschlusskammer (20) beaufschlagt wird.

6. Bremssystem nach Anspruch 2 und einem der Ansprüche 3 bis 5 **dadurch gekennzeichnet, dass** die zweite Ansteuerkammer (18) hydraulisch mit dem Mittenabgriff (28) der Vorsteuerstufe (9 bzw. 11, 12) verbunden ist.

7. Bremssystem nach einem der Ansprüche 3 bis 6 **dadurch gekennzeichnet, dass** die erste Ansteuerkammer (17) hydraulisch mit einem Druckkreis (II) des Hauptbremszylinders (3) verbunden ist.

8. Bremssystem nach einem der Ansprüche 3 bis 7 **dadurch gekennzeichnet, dass** der Ventilkörper (14) im Zusammenwirken mit der Ventilhülse (13) in einer Ruhestellung eine hydraulische Verbindung zwischen der Arbeitsdruckanschlusskammer (21) und einer Behälteranschlusskammer (19) herstellt, deren hydraulischer Durchtrittsquerschnitt sich beim Aufbringen eines Verfahrwegs des Ventilkörpers (14) in der Ventilhülse (13) kontinuierlich verkleinert und der Ventilkörper (14) beim weiteren Verschieben um einen geringen "Überdeckungsweg" die drei Anschlusskammern (19, 21, 20) voneinander trennt, um bei einem noch weiteren Verschieben eine hydraulische Verbindung zwischen der Hochdruckanschlusskammer (20) und der Arbeitsdruckanschlusskammer (21) kontinuierlich zu öffnen.

9. Bremssystem nach einem der Ansprüche 3 bis 8 **dadurch gekennzeichnet, dass** der erste Ansteuerkolben (15) als ein Stufenkolben ausgebildet ist.

10. Bremssystem nach Anspruch 9 **dadurch gekennzeichnet, dass** eine hydraulische Ringkammer (22) zwischen den beiden Dichtquerschnitten des Stufenkolbens (15) hydraulisch mit der Behälteranschlusskammer (19) verbunden ist.

11. Bremssystem nach Anspruch 7 und einem der Ansprüche 8 bis 10 **dadurch gekennzeichnet, dass** die Verbindung zwischen dem Hauptbremszylinder (3)' und der ersten Ansteuerkammer (17) mittels eines elektromagnetisch betätigbaren, stromlos offenen (SO-) 2/2-Wegeventils (23) absperrbar ist, wobei ein wirkungsmäßig zu diesem Ventil (23) parallel geschaltetes Rückschlagventil (24) vorgesehen ist, das unabhängig von der Schaltstellung des stromlos offenen (SO-) 2/2-Wegeventils (23) einen die erste Ansteuerkammer (17) verlassenden Druckmittelvolumenstrom zulässt.

12. Bremssystem nach Anspruch 9 und einem der Ansprüche 10 oder 11 **dadurch gekennzeichnet, dass** die der Arbeitsdruckanschlusskammer (21) zugewandte Stirnfläche des Ventilkörpers (14) größer als die die erste Ansteuerkammer (17) begrenzende Fläche des Stufenkolbens (15) ist.

13. Bremssystem nach einem der Ansprüche 3 bis 12 **dadurch gekennzeichnet, dass** zwischen der Arbeitsdruckanschlusskammer (21) und dem Druckmittelvorratsbehälter (37) eine hydraulische Verbindung (44) vorgesehen ist, in der ein zum Druckmittelvorratsbehälter (37) schließendes Rückschlagventil (26) eingefügt ist.

14. Bremssystem nach einem der vorhergehenden Ansprüche **dadurch gekennzeichnet, dass** ein Drucksensor (27) zum Erfassen des im Hauptbremszylinder (2) eingesteuerten Druckes vorgesehen ist.

15. Bremssystem nach einem der vorhergehenden Ansprüche **dadurch gekennzeichnet, dass** ein Wegsensor (29) zum Erfassen des Weges des Verstärkerkolbens (5) vorgesehen ist.

## Claims

1. Brake system for motor vehicles, with a brake master cylinder (3) actuable by means of a brake pedal (33), with a pressure-medium reservoir (37) assigned to the brake master cylinder (3), with a hydraulic booster stage (5, 35, 40) operatively preceding the brake master cylinder (3) and having a booster piston (5) which is acted upon with a hydraulic boost pressure provided by a pressure source (6) and which, in all operating modes, allows direct mechanical reach from the brake pedal (33) to a hydraulic piston (7) of the brake master cylinder (3), and with an electrically activateable pressure-regulating valve arrangement (8) for metering the boost pressure, **characterized in that** the pressure-regulating valve arrangement (8) has a doubly hydraulically activateable main valve stage (10) which, in a first operating mode, is activated by electrically activateable valves (11, 12) of a pilot control stage (9) and, in another operating mode, is activated by means of a pressure generated by the brake master cylinder (3).

2. Brake system according to Claim 1, **characterized in that** the pilot control stage (9 or 11, 12) is formed by the series connection of an analogue-regulateable, currentlessly closed (CC) 2/2-way valve (11) and of an analogue-regulateable, currentlessly open (CO) 2/2-way valve (12), a hydraulic centre tap (28) between the two valves (11, 12) delivering one of the activation pressures for the main valve stage (10).

3. Brake system according to Claim 1 or 2, **characterized in that** the pressure-regulating valve arrangement (8) consists of a 3/3-way valve with a main valve stage (10) and with a hydraulic activation stage (15, 16, 17, 22, 18), the main valve stage (10) having a valve sleeve (13) and a valve body (14) axially displaceable in the valve sleeve (13), while the hydraulic activation stage (15, 16, 17, 22, 18) consists of a first (15) and of a second (16) activation piston, the first activation piston (15) delimiting a first hydraulic activation chamber (17), the first (15) and the second (16) activation pistons delimiting a second hydraulic activation chamber (18), the second activation piston (16) and the valve body (14) delimiting a hydraulic reservoir connection chamber (19) and the valve body (14) and the valve sleeve (13) delimiting a high-pressure connection chamber (20) and a working-pressure connection chamber (21).

4. Brake system according to Claim 3, **characterized in that** the valve body (14) and the second activation piston (16) are formed in one piece.

5. Brake system according to either one of Claims 3 and 4, **characterized in that** the valve body (14), on its end face facing away from the second activation piston (16), projects into the working-pressure connection chamber (21) and is acted upon with the pressure of the high-pressure connection chamber (20).

6. Brake system according to Claim 2 and one of Claims 3 to 5, **characterized in that** the second activation chamber (18) is connected hydraulically to the centre tap (28) of the pilot control stage (9 or 11, 12).

7. Brake system according to one of Claims 3 to 6, **characterized in that** the first activation chamber (17) is connected hydraulically to a pressure circuit (II) of the brake master cylinder (3).

8. Brake system according to one of Claims 3 to 7, **characterized in that**, in a position of rest, the valve body (14) makes, in the interaction with the valve sleeve (13), a hydraulic connection between the working-pressure connection chamber (21) and a reservoir connection chamber (19), the hydraulic passage cross section of which decreases continuously upon the implementation of a movement travel of the valve body (14) in the valve sleeve (13), and, upon further displacement by the amount of a short "overlap travel", the valve body (14) separates the three connection chambers (19, 21, 20) from one another, in order, upon yet further displacement, to open continuously a hydraulic connection between the high-pressure connection chamber (20) and the working-pressure connection chamber (21).

9. Brake system according to one of Claims 3 to 8, **characterized in that** the first activation piston (15) is designed as a step piston.

10. Brake system according to Claim 9, **characterized in that** a hydraulic annular chamber (22) between the two sealing cross sections of the step piston (15) is connected hydraulically to the reservoir connection chamber (19).

11. Brake system according to Claim 7 and one of Claims 8 to 10, **characterized in that** the connection between the brake master cylinder (3) and the first activation chamber (17) can be shut off by means of an electromagnetically actuable, currentlessly open (CO) 2/2-way valve (23), a non-return valve (24) operatively connected in parallel to this valve (23) being provided, which, independently of the switching position of the currentlessly open (CO) 2/2-way valve (23), allows a pressure-medium volume flow leaving the first activation chamber (17).

12. Brake system according to Claim 9 and either one of Claims 10 and 11, **characterized in that** that end face of the valve body (14) which faces the working-pressure connection chamber (21) is larger than that face of the step piston (15) which delimits the first activation chamber (17).

13. Brake system according to one of Claims 3 to 12, **characterized in that**, between the working-pressure connection chamber (21) and the pressure-medium reservoir (37), a hydraulic connection (44) is provided, in which is inserted a non-return valve (26) closing towards the pressure-medium reservoir (37).

14. Brake system according to one of the preceding claims, **characterized in that** a pressure sensor (27) for detecting the pressure fed into the brake master cylinder (3) is provided.

15. Brake system according to one of the preceding claims, **characterized in that** a travel sensor (29) for detecting the travel of the booster piston (5) is provided.

## Revendications

1. Système de freinage pour véhicules automobiles avec un maître-cylindre (3) actionnable au moyen d'une pédale de frein (33), avec un réservoir de fluide comprimé (37) associé au maître-cylindre (3), avec un étage amplificateur hydraulique (5, 35, 40) disposé activement en amont du maître-cylindre (3), avec un piston amplificateur (5), qui est soumis à une pression d'amplification hydraulique fournie par une source de pression (6) et qui, dans tous les modes de fonctionnement, permet une transmission mécanique directe depuis la pédale de frein (33) à un piston hydraulique (7) du maître-cylindre (3), ainsi qu'avec un dispositif de distributeur de réglage de pression à commande électrique (8) pour le dosage de la pression d'amplification, **caractérisé en ce que** le dispositif de distributeur de réglage de pression (8) présente un étage principal de distributeur (10) à commande hydraulique double qui, dans un premier mode de fonctionnement, est commandé par des distributeurs à commande électrique (11, 12) d'un étage de commande primaire (9) et, dans un deuxième mode de fonctionnement, est commandé au moyen d'une pression produite par le maître-cylindre (3).

2. Système de freinage selon la revendication 1, **caractérisé en ce que** l'étage de commande primaire (9 ou 11, 12) est formé par le montage en séquence d'un distributeur à 2/2 voies (11) fermé sans courant (SG-) réglable de façon analogique et d'un distributeur à 2/2 voies (12) ouvert sans courant (SO-) réglable de façon analogique, dans lequel une prise hydraulique médiane (28) entre les deux distributeurs (11, 12) fournit une des pressions de commande pour l'étage principal de distributeur (10).

3. Système de freinage selon la revendication 1 ou 2, **caractérisé en ce que** le dispositif de distributeur de réglage de pression (8) se compose d'un distributeur à 3/3 voies avec un étage principal de distributeur (10) ainsi que d'un étage de commande hydraulique (15, 16, 17, 22, 18), dans lequel l'étage principal de distributeur (10) présente un manchon de distributeur (13) ainsi qu'un corps de distributeur (14) coulissant axialement dans le manchon de distributeur (13), tandis que l'étage de commande hydraulique (15, 16, 17, 22, 18) se compose d'un premier (15) et d'un deuxième (16) pistons de commande, dans lequel le premier piston de commande (15) limite une première chambre de commande hydraulique (17), le premier (15) et le deuxième (16) pistons de commande limitent une deuxième chambre de commande hydraulique (18), le deuxième piston de commande (16) et le corps de distributeur (14) limitent une chambre de raccordement hydraulique de réservoir (19), et le corps de distributeur (14) et le manchon de distributeur (13) limitent une chambre de raccordement haute pression (20) et une chambre de raccordement de la pression de travail (21).

4. Système de freinage selon la revendication 3, **caractérisé en ce que** le corps de distributeur (14) et le deuxième piston de commande (16) sont réalisés en une seule pièce.

5. Système de freinage selon l'une des revendications 3 ou 4, **caractérisé en ce que** le corps de distributeur (14) pénètre, sur sa face frontale à l'opposé du deuxième piston de commande (16), dans la chambre de raccordement de la pression de travail (21) et est soumis à la pression de la chambre de raccordement haute pression (20).

6. Système de freinage selon la revendication 2 et l'une quelconque des revendications 3 à 5, **caractérisé en ce que** la deuxième chambre de commande (18) est en communication hydraulique avec la prise médiane (28) de l'étage de commande primaire (9 ou 11, 12).

7. Système de freinage selon l'une quelconque des revendications 3 à 6, **caractérisé en ce que** la première chambre de commande (17) est en communication hydraulique avec un circuit sous pression (II) du maître-cylindre (3).

8. Système de freinage selon l'une quelconque des revendications 3 à 7, **caractérisé en ce que** le corps de distributeur (14) établit, en coopération avec le manchon de distributeur (13), dans une position de repos une communication hydraulique entre la chambre de raccordement de la pression de travail (21) et une chambre de raccordement de réservoir (19), dont la section transversale mouillée hydraulique se réduit en continu lors de l'exécution d'une course de déplacement du corps de distributeur (14) dans le manchon de distributeur (13) et le corps de distributeur (14) sépare l'une de l'autre les trois chambres de raccordement (19, 21, 20) lors d'un déplacement supplémentaire d'une petite "course de recouvrement", afin d'ouvrir en continu, lors d'encore un autre déplacement supplémentaire, une communication hydraulique entre la chambre de raccordement haute pression (20) et la chambre de raccordement de la pression de travail (21).

9. Système de freinage selon l'une quelconque des revendications 3 à 8, **caractérisé en ce que** le premier piston de commande (15) est réalisé sous la forme d'un piston étagé.

10. Système de freinage selon la revendication 9, **caractérisé en ce qu'**une chambre annulaire hydraulique (22) entre les deux sections transversales d'étanchéité du piston étagé (15) est en communication hydraulique avec la chambre de raccordement de réservoir (19).

11. Système de freinage selon la revendication 7 et l'une quelconque des revendications 8 à 10, **caractérisé en ce que** la communication entre le maître-cylindre (3) et la première chambre de commande (17) peut être fermée au moyen d'un distributeur à 2/2 voies (23) ouvert sans courant (SO-) à commande électromagnétique, dans lequel il est prévu un clapet anti-retour (24) monté activement en parallèle à ce distributeur (23), qui permet un écoulement volumique de fluide sous pression quittant la première chambre de commande (17) indépendamment de la position de commutation du distributeur à 2/2 voies ouvert sans courant (SO-) (23) .

12. Système de freinage selon la revendication 9 et l'une des revendications 10 ou 11, **caractérisé en ce que** la face frontale du corps de distributeur (14) tournée vers la chambre de raccordement de la pression de travail (21) est plus grande que la face du piston étagé (15) limitant la première chambre de commande (17) .

13. Système de freinage selon l'une quelconque des revendications 3 à 12, **caractérisé en ce qu'**il est prévu entre la chambre de raccordement de la pression de travail (21) et le réservoir de fluide sous pression (37) une communication hydraulique (44), dans laquelle est inséré un clapet anti-retour (26) se fermant vers le réservoir de fluide sous pression (37).

14. Système de freinage selon l'une quelconque des revendications précédentes, **caractérisé en ce qu'**il est prévu un capteur de pression (27) pour détecter la pression imposée dans le maître-cylindre (3).

15. Système de freinage selon l'une quelconque des revendications précédentes, **caractérisé en ce qu'**il est prévu un détecteur de course (29) pour détecter la course du piston amplificateur (5).
